# EUROPEAN PATENT SPECIFICATION

(11) **EP 4 273 013 B1**
(45) Date of publication and mention of the grant of the patent: **05.03.2025**
(21) Application number: 23163691.1
(22) Date of filing: 23.03.2023
(51) Int. Cl.: B60W 40/09, B60W 30/095, B60W 30/18, B60W 50/00, B60W 50/10

(54) **INDIVIDUAL CHARACTERISTICS MANAGEMENT DEVICE, INDIVIDUAL CHARACTERISTICS MANAGEMENT METHOD, NON-TRANSITORY STORAGE MEDIUM STORING A PROGRAM**
VORRICHTUNG ZUR VERWALTUNG INDIVIDUELLER EIGENSCHAFTEN, VERFAHREN ZUR VERWALTUNG INDIVIDUELLER EIGENSCHAFTEN, NICHTFLÜCHTIGES SPEICHERMEDIUM MIT DARAUF GESPEICHERTEM PROGRAMM
DISPOSITIF DE GESTION DE CARACTÉRISTIQUES INDIVIDUELLES, PROCÉDÉ DE GESTION DE CARACTÉRISTIQUES INDIVIDUELLES, SUPPORT DE STOCKAGE NON TRANSITOIRE STOCKANT UN PROGRAMME

(30) Priority: 02.05.2022 JP 2022076205
(43) Date of publication of application: 08.11.2023
(73) Proprietor: TOYOTA JIDOSHA KABUSHIKI KAISHA, Aichi-Ken 471-8571 (JP)
(72) Inventor: MANABE, Shuhei, Toyota-shi 471-8571 (JP); ENDO, Masato, Toyota-shi 471-8571 (JP)
(74) Representative: J A Kemp LLP

(56) References cited:
- EP-A1- 2 821 978
- WO-A1-2014/034779
- JP-A- 2019 016 238
- US-A1- 2006 235 753
- US-A1- 2021 086 773
- US-A1- 2021 158 707

## Description

### BACKGROUND

### Technical Field

The present invention relates to an individual characteristics management device, an individual characteristics management method, and a non-transitory storage medium that stores a program.

### Related Art

Japanese Patent Application Laid-Open (JP-A) No. 2007-327872 discloses a driver personality judging device that judges a "degree of impatience" in accordance with the relative frequency of times of refueling, and judges the "adherence to regulations" from the traveling history of the vehicle.

However, because the device disclosed in JP-A No. 2007-327872 estimates the personality of the driver based on the timing of refueling and the traveling history of the vehicle, individual characteristics of the driver cannot be estimated with high accuracy. US 2021/158707 A1 discloses a process of providing a report predicting potential risks relating to an operator driving a vehicle using information obtained from various interior and exterior sensors, vehicle onboard computer ("VOC"), and cloud network. JP 2019 016238 A discloses an estimation device, vehicle terminal, program, and method for estimating road sections where individual characteristics are easily identified from driving vehicle signals. US 2021/086773 A1 discloses a driving behavior evaluation device. WO 2014/034779 A1 discloses an individual characteristic estimation unit and method.

### SUMMARY

The present invention provides an individual characteristics management device, an individual characteristics management method, and a non-transitory storage medium that stores a program, that may estimate individual characteristics with high accuracy.

A first aspect of the present invention is an individual characteristics management device defined by claim 1.

In the individual characteristics management device of the first aspect, individual characteristics of the driver are estimated based on driving data relating to plural driving evaluation items that are set in advance. Therefore, highly accurate estimation can be carried out.

In the individual characteristics management device of the first aspect, the user can grasp characteristics that include a driving characteristic and a cognitive characteristic. Note that what are called "driving characteristics" here are characteristics expressing tendencies relating to driving operations by the user. What are called "cognitive characteristics" here are characteristics expressing a degree to which the user recognizes the peripheral situation.

In an individual characteristics management device of a second aspect, in the first aspect, the data acquiring section acquires driving data, which includes at least acceleration and steering of a vehicle, as the driving evaluation items.

In the individual characteristics management device of the second aspect, individual characteristics of the driver are estimated based on driving data that includes acceleration and steering of the vehicle.

In an individual characteristics management device of a third aspect, in the second aspect, the data acquiring section further acquires, as the driving evaluation items, information captured by peripheral cameras that capture images of a periphery of the vehicle and information captured by a camera for a driver that captures images of a driver.

In the individual characteristics management device of the third aspect, individual characteristics of the driver are estimated based on information captured by the peripheral cameras and the camera for the driver, in addition to driving data relating to vehicle operations such as acceleration and steering and the like of the vehicle.

In an individual characteristics management device of a fourth aspect, in any one of the first aspect through the third aspect, the individual characteristics estimating section estimates the individual characteristics by inputting driving data acquired by the data acquiring section into a learned model on which machine learning for estimating individual characteristics has been carried out, and executing computing processing of the learned model.

In the individual characteristics management device of the fourth aspect, by estimating the individual characteristics by using the learned model on which machine learning for estimating individual characteristics has been carried out, the individual characteristics can be estimated highly accurately without necessitating complex computation.

A fifth aspect of the present invention is an individual characteristics management method defined in the claims.

A non-transitory storage medium storing a program of a sixth aspect defined in the claims.

In accordance with the individual characteristics management device, individual characteristics management method, and non-transitory storage medium that stores a program, that relate to the present invention, individual characteristics can be estimated with high accuracy.

### BRIEF DESCRIPTION OF THE DRAWINGS

An exemplary embodiment of the present invention will be described in detail based on the following figures, wherein:
Fig. 1 is a schematic drawing illustrating the overall structure of an individual characteristics management system relating to an embodiment;
Fig. 2 is a block drawing illustrating hardware structures of an individual characteristics management device relating to the embodiment;
Fig. 3 is a block drawing illustrating hardware structures of an onboard device relating to the embodiment;
Fig. 4 is a block drawing illustrating functional structures of the individual characteristics management device relating to the embodiment;
Fig. 5 is a block drawing for explaining a learning phase in the embodiment;
Fig. 6 is a table illustrating examples of driving evaluation items;
Fig. 7 is a table illustrating examples of driving characteristics and a cognitive characteristic; and
Fig. 8 is a sequence drawing illustrating an example of the flow of individual characteristics estimating processing in the embodiment.

### DETAILED DESCRIPTION

A system S that includes an individual characteristics management device 10 relating to an embodiment is described with reference to the drawings.

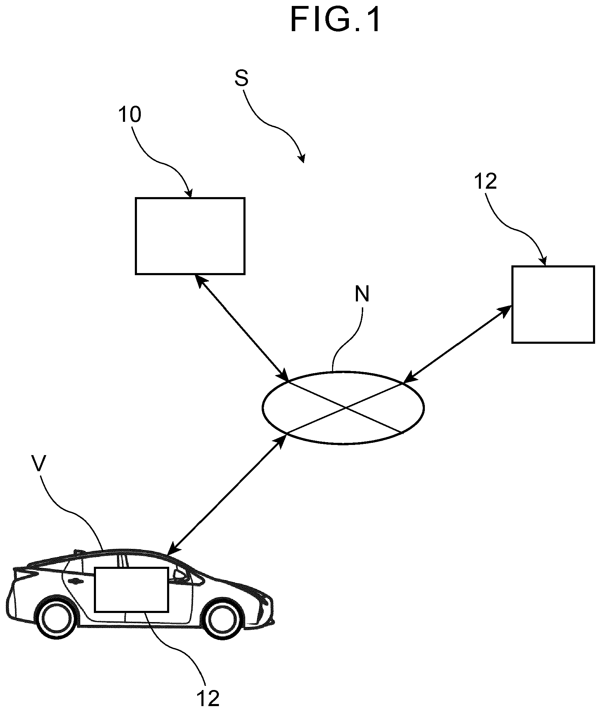

As illustrated in Fig. 1, the system S of the present embodiment is structured to include the individual characteristics management device 10, a server 12, and vehicles V. The individual characteristics management device 10, the server 12 and the vehicles V are connected by network N. Note that, although the plural vehicles V are connected to the network N, only the one vehicle V is illustrated in Fig. 1 for convenience of explanation.

A control device that is provided at the exterior of the vehicle V is an example of the individual characteristics management device 10 of the present embodiment. Further, an onboard device 14 is installed in the vehicle V.

The server 12 is a server that is possessed by the manager of the plural vehicles V. Namely, the manager who manages the plural vehicles V possesses the server 12, and, in the present embodiment, as an example, the vehicles V are vehicles that are used as taxis that users ride and travel in. Further, the server 12 is possessed by a taxi company.

Here, the individual characteristics management device 10 of the present embodiment estimates individual characteristics of drivers who drive the respective vehicles V, based on driving data of the drivers.

### (Hardware Structures of Individual characteristics management Device 10)

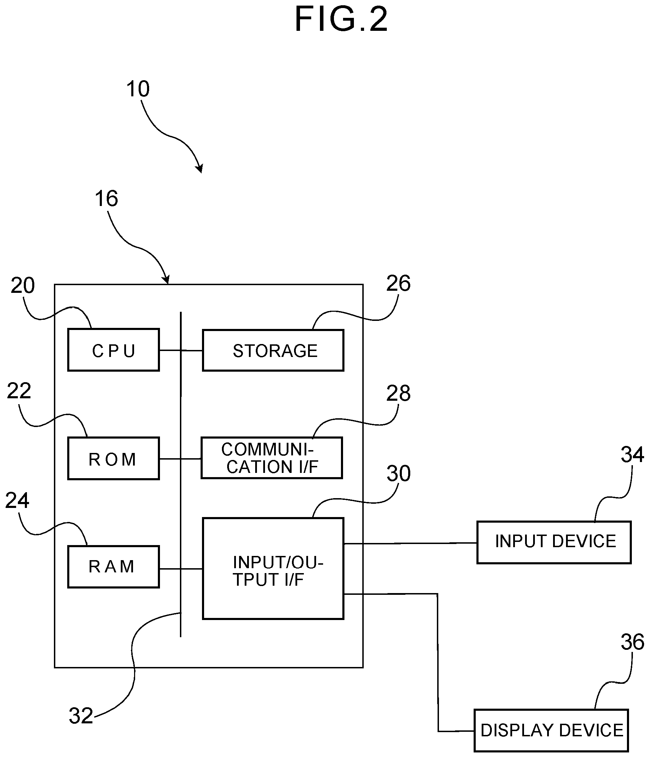

Fig. 2 is a block drawing illustrating hardware structures of the individual characteristics management device 10. As illustrated in Fig. 2, the individual characteristics management device 10 has an ECU (Electronic Control Unit) 11 serving as a control section. The ECU 11 is structured to include a CPU (Central Processing Unit: processor) 20, a ROM (Read Only Memory) 22, a RAM (Random Access Memory) 24, a storage 26, a communication I/F (communication interface) 28 and an input/output I/F (input/output interface) 30. These respective structures are connected so as to be able to communicate with one another via bus 32.

The CPU 20 is a central computing processing unit, and executes various programs and controls respective sections. Namely, the CPU 20 reads-out a program from the ROM 22 or the storage 26, and executes the program by using the RAM 24 as a workspace. The CPU 20 carries out control of the above-described respective structures, and various types of computing processings, in accordance with programs that are recorded in the ROM 22 or the storage 26.

The ROM 22 stores various programs and various data. The RAM 24 temporarily stores programs and data as a workspace. The storage 26 is structured by an HDD (Hard Disk Drive) or an SSD (Solid State Drive), and stores various programs, including the operating system, and various data. In the present embodiment, a program for carrying out individual characteristics estimating processing, and various data and the like are stored in the ROM 22 or the storage 26.

The communication I/F 28 is an interface for the individual characteristics management device 10 to communicate with the server 12 and other equipment, and standards such as, for example, CAN (Controller Area Network), Ethernet^{®}, LTE (Long Term Evolution), FDDI (Fiber Distributed Data Interface), Wi-Fi^{®}, or the like are used thereat.

The input/output I/F 30 is electrically connected to an input device 34 and a display device 36. The input device 34 is a device for inputting predetermined instructions to the individual characteristics management device 10, and is structured to include, for example, a mouse and a keyboard and the like. The display device 36 is a device such as a display or the like for displaying information outputted from the individual characteristics management device 10.

### (Hardware Structures of Onboard Device 14)

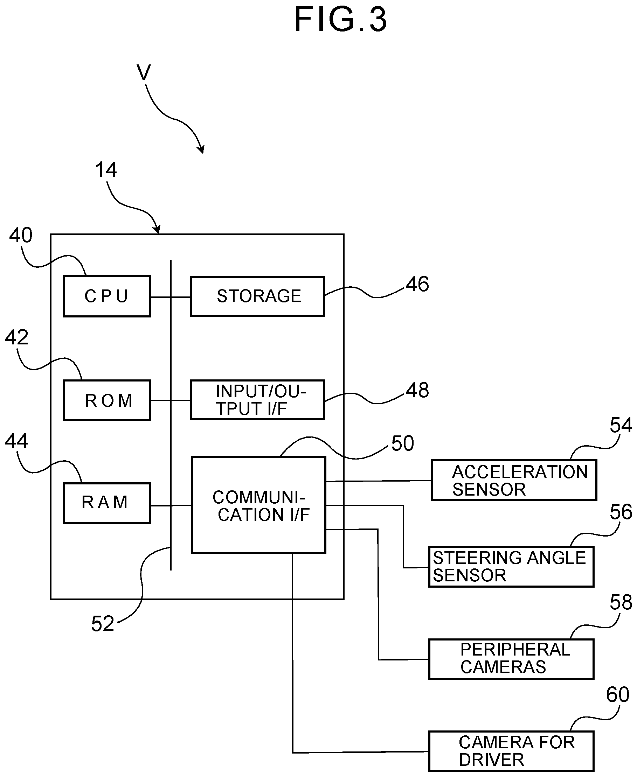

Fig. 3 is a block drawing illustrating hardware structures of the onboard device 14. As illustrated in Fig. 3, the onboard device 14 is structured to include a CPU (Central Processing Unit: processor) 40, a ROM (Read Only Memory) 42, a RAM (Random Access Memory) 44, a storage 46, a communication I/F (communication interface) 48 and an input/output I/F (input/output interface) 50. These respective structures are connected so as to be able to communicate with one another via bus 52.

The CPU 40 is a central computing processing unit, and executes various programs and controls respective sections. Namely, the CPU 40 reads-out a program from the ROM 42 or the storage 46, and executes the program by using the RAM 44 as a workspace. The CPU 40 carries out control of the above-described respective structures, and various types of computing processings, in accordance with programs that are recorded in the ROM 42 or the storage 46.

The ROM 42 stores various programs and various data. The RAM 44 temporarily stores programs and data as a workspace. The storage 46 is structured by an HDD (Hard Disk Drive) or an SSD (Solid State Drive), and stores various programs, including the operating system, and various data. In the present embodiment, programs for carrying out various processings, and various data and the like are stored in the ROM 42 or the storage 46.

The communication I/F 48 is an interface for the onboard device 14 to communicate with the server 12 and other equipment, and standards such as, for example, CAN, Ethernet^{®}, LTE, FDDI, Wi-Fi^{®}, or the like are used thereat.

The input/output I/F 50 is electrically connected to an acceleration sensor 54, a steering angle sensor 56, peripheral cameras 58, and a camera 60 for the driver.

The acceleration sensor 54 detects the acceleration of the vehicle V. The steering angle sensor 56 detects the steering angle of the vehicle V. The data of the acceleration that is sensed by the acceleration sensor 54 is used, for example, in order to judge the absence/presence of sudden acceleration of the vehicle V. Further, the data of the steering angle that is sensed by the steering angle sensor 56 is used, for example, in order to judge the absence/presence of sudden steering or a U-turn. Note that the amounts of operation of the accelerator pedal and the brake pedal or the like may be detected directly from sensors such as an accelerator position sensor and a brake sensor or the like, instead of the acceleration sensor 54.

The peripheral cameras 58 are provided at the periphery of the vehicle V, and capture images of the surroundings of the vehicle V. For example, the peripheral cameras 58 are structured to include a front camera that captures images of the region in front of the vehicle V, a rear camera that captures images of the region at the rear of the vehicle V, side cameras that capture images of the regions at the lateral sides of the vehicle V, and the like. Further, the image data captured by the peripheral cameras 58 is used, for example, in order to calculate the inter-vehicle distance between the vehicle V and a preceding vehicle. Further, the image data captured by the peripheral cameras 58 is used, for example, in order to detect signs.

The camera 60 for the driver is a camera for capturing images of the driver, and is provided at the instrument panel for example, and is disposed so as to face the driver. The image data captured by the camera 60 for the driver is used, for example, in order to detect driving while taking one's eyes off the road, or the like.

### (Functional Structures of Individual characteristics management Device 10)

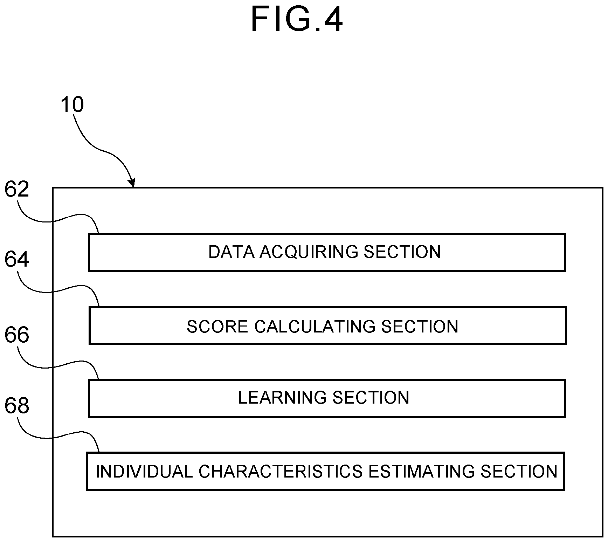

The individual characteristics management device 10 realizes various functions by using the above-described hardware resources. The functional structures that are realized by the individual characteristics management device 10 are described with reference to Fig. 4.

As illustrated in Fig. 4, the individual characteristics management device 10 is structured to include, as the functional structures thereof, a data acquiring section 62, a score calculating section 64, a learning section 66, and an individual characteristics estimating section 68. Note that these respective functional structures are realized due to the CPU 20 reading-out a program stored in the ROM 22 or the storage 26 and executing the program.

The data acquiring section 62 acquires driving data that relates to plural driving evaluation items that are set in advance. In the present embodiment, as an example, driving data are transmitted from the vehicle V to the server 12, and the driving data are accumulated in the server 12. Therefore, the data acquiring section 62 acquires driving data from the server 12. The driving data acquired by the data acquiring section 62 is, for example, information relating to the acceleration and steering of the vehicle V, information captured by the peripheral cameras 58, information captured by the camera 60 for the driver, and the like. Further, the data acquiring section 62 acquires, as driving data, data that includes scores and numbers of times of measurement that are calculated by the score calculating section 64.

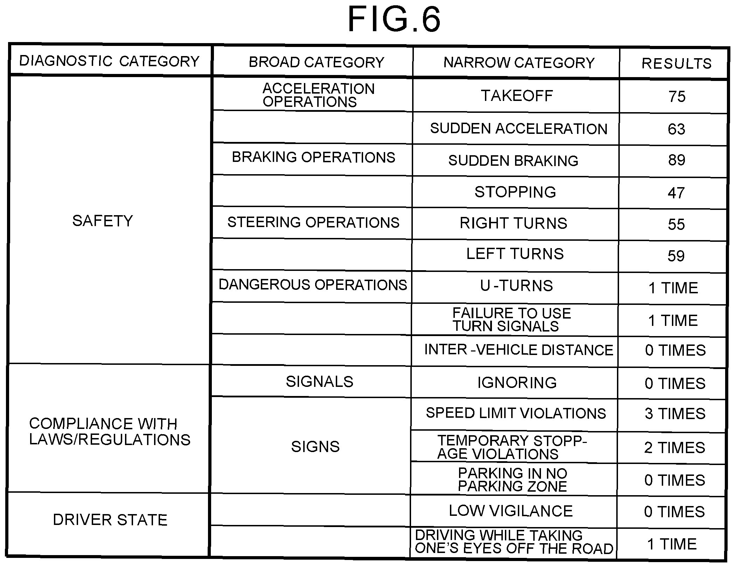

Based on the driving data acquired by the data acquiring section 62, the score calculating section 64 carries out calculating of the score or measurement of the number of times, for each of the driving evaluation items. Here, an example of the driving evaluation items is described with reference to Fig. 6.

As illustrated in Fig. 6, in the present embodiment, as an example, the diagnostic categories of the driving evaluation items are divided into safety, compliance with laws/regulations, and driver state.

The diagnostic category that is safety is divided into acceleration operations, braking operations, steering operations, and dangerous operations. Takeoff and sudden acceleration are respectively evaluated as acceleration operations. Specifically, in the takeoff item, the acceleration operation from a stopped state of the vehicle V until a predetermined speed is reached is evaluated based on data sensed by the acceleration sensor 54 provided at the vehicle V. Further, a score from 0 to 100 is calculated as the evaluation of the takeoff. Scores from 0 to 100 are similarly calculated for the evaluations of sudden acceleration, sudden braking, stopping, right turn, and left turn.

For example, the score for the takeoff item may be calculated based on the time from the stopped state of the vehicle V until a predetermined speed is reached, and the amount of change in the acceleration during the time until the predetermined speed is reached. Further, the score for the most ideal takeoff state may be set to be 100, and the score for the takeoff state in which the accelerator is fully opened from the stopped state may be set to be 0, and the score may be calculated by comparison with the actual takeoff state.

The degree to which sudden acceleration is carried out is calculated as the score for the item of sudden acceleration. For example, the score may be calculated to be low in a case in which the amount of increase in the acceleration in a relatively short time is large, based on the acceleration sensed by the acceleration sensor 54 provided at the vehicle V.

Evaluation of both sudden braking and stopping is carried out for the braking operations. For the sudden braking item, the degree to which sudden braking is carried out is calculated as the score. For example, the score may be calculated to be low in a case in which the amount of decrease in the acceleration in a relatively short time is large, based on the data sensed by the acceleration sensor 54 provided at the vehicle V. Further, for the stopping item, the score may be calculated based on the time until the vehicle V stops from a predetermined speed, and the amount of change in the acceleration during the time period until the vehicle V stops.

Both right turns and left turns are evaluated as steering operations. For example, for the item of right turns, the score may be set based on the steering angle of the vehicle V sensed by the steering angle sensor 56 such that, the closer that the amount of change in the steering angle during a predetermined time period is to a preset ideal state, the higher the score. For the item of left turns as well, the score is calculated similarly to the right turns item.

U-turns, failure to use turn signals, and inter-vehicle distance are respectively evaluated as dangerous operations. These items do not have scores, and are evaluated based on the number of times of detection.

For the U-turn item, the number of times that a U-turn is carried out is counted. For example, it may be judged that a U-turn has been carried out based on the steering angle of the vehicle V sensed by the steering angle sensor 56 and the traveled distance. For the item that is failure to use turn signals, the number of times that a turn signal light was not turned on before a left or right turn is counted. For example, in a state in which it is judged that a left or right turn has been carried out based on the steering angle of the vehicle V sensed by the steering angle sensor 56, if an unillustrated turn signal switch installed in the vehicle V was not turned on in advance thereof, it may be judged that there was failure to use a turn signal.

For the inter-vehicle distance item, the number of times that the inter-vehicle distance to the preceding vehicle became short is counted. For example, in a case in which the inter-vehicle distance between the vehicle V and the preceding vehicle that is calculated based on image data captured by the peripheral cameras 58 is less than or equal to a predetermined inter-vehicle distance, it may be judged that the inter-vehicle distance to the preceding vehicle has become short.

The diagnostic category of compliance with laws/regulations is divided into signals and signs. For signals, the number of times that a signal was ignored is counted. For signs, evaluation is carried out for each of violating the speed limit, violating a temporary stoppage regulation, and parking in a no parking zone.

For the speed limit item, the number of times that the speed limit was exceeded is counted. For example, based on the image data captured by the peripheral cameras 58, speed limits displayed on signs are detected, and, if the vehicle speed detected by an unillustrated vehicle speed sensor installed in the vehicle V is greater than the speed limit, it may be judged that the speed limit has been exceeded.

For the item of violating a temporary stoppage regulation, the number of times that the vehicle V did not stop at a position where temporary stoppage is mandated is counted. For example, signs prescribing temporary stoppage may be detected based on the image data captured by the peripheral cameras 58, and, if the vehicle speed is not 0 at a position of temporary stoppage, it may be judged that there is a temporary stoppage violation.

For the item of parking in a no parking zone, the number of times that parking in a no parking zone was carried out is counted. For example, based on the image data captured by the peripheral cameras 58, no parking signs may be detected, and, if the shift position is set to park at a place where parking is prohibited, it may be judged that there is a no parking violation. Note that, for the item of speed limit violations, instead of a method of detecting signs based on the image data captured by the peripheral cameras 58, speed limit information of the road on which the vehicle V is traveling may be acquired from the current position of the vehicle V and information registered in the navigation system. Similarly, places of temporary stoppage and no parking may be sensed from the current position of the vehicle V and information registered in the navigation system. Note that current position information of the vehicle V is acquired based on radio waves received by an unillustrated GPS (Global Positioning System) device that is installed in the vehicle V.

In the diagnostic category of driver state, items that are low vigilance and driving while taking one's eyes off the road are both evaluated. For the low vigilance item, the number of times that it was judged that the vigilance of the driver was low is counted. For example, the degree of vigilance of the driver may be calculated based on image data of the face of the driver captured by the camera 60 for the driver, and, if the degree of vigilance is lower than a preset threshold value, it may be judged that the level of vigilance is low.

For the item of driving while taking one's eyes off the road, the number of times that the driver looked away during driving is counted. For example, the sightline direction of the driver may be detected from image data of the face of the driver captured by the camera 60 for the driver, and, if the sightline direction of the driver is directed in a direction different than the advancing direction for a predetermined time period or more, it may be judged that driving while taking one's eyes off the road is being carried out.

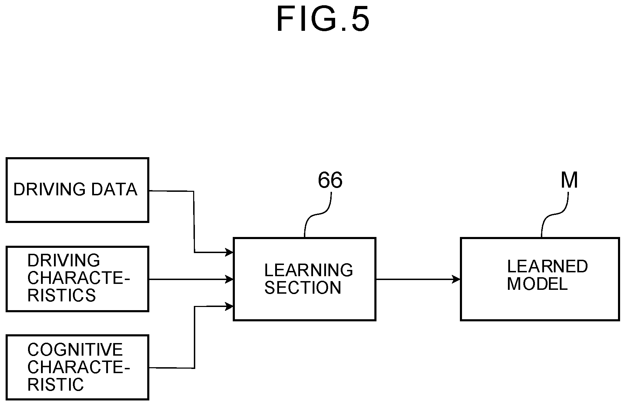

The learning section 66 illustrated in Fig. 4 has the function of generating a learned model M by machine learning. This is not part of the claimed invention. Concretely, as illustrated in Fig. 5, the learning section 66 acquires teacher data in which driving data, which serves as information relating to plural driving evaluation items, and correct answer values for driving characteristics and a cognitive characteristic respectively, are set in correspondence with one another. Based on the acquired teacher data, when data relating to a driving evaluation item is inputted, the learning section 66 generates the learned model M that estimates individual characteristics that include driving characteristics and a cognitive characteristic. The driving characteristics and the cognitive characteristic are described hereafter.

Note that a deep neural network for example is used as the learned model M. LSTM (Long Short-Term Memory) that is a type of an RNN (Recursive Neural Network) is used as an example of the learned model M of the present embodiment. Further, for example, error back propagation is used in generating the learned model M. When driving data is inputted, the learned model M is generated due to the deep neural network model being machine-trained such that driving characteristics and the cognitive characteristic are outputted.

For example, diagnostic results of a diagnosis of the appropriateness of the driver that is carried out by an external organization such as the National Agency for Automotive Safety & Victims' Aid or the like may be used as the correct answer values of the driving characteristics. Further, test results of a test that evaluates cognitive functions such as the MMSE (Mini-Mental State Examination) or the like may be used as the correct answer value of the cognitive characteristic.

The individual characteristics estimating section 68 estimates individual characteristics of the driver based on driving data that includes the scores and that is acquired by the data acquiring section 62. Concretely, the individual characteristics estimating section 68 inputs the driving data acquired by the data acquiring section 62 into the learned model M generated at the learning section 66, and executes the computing processing of the learned model M, and thereby estimates the individual characteristics. Further, in the present embodiment, as an example, the individual characteristics estimating section 68 estimates driving characteristics and a cognitive characteristic as the individual characteristics.

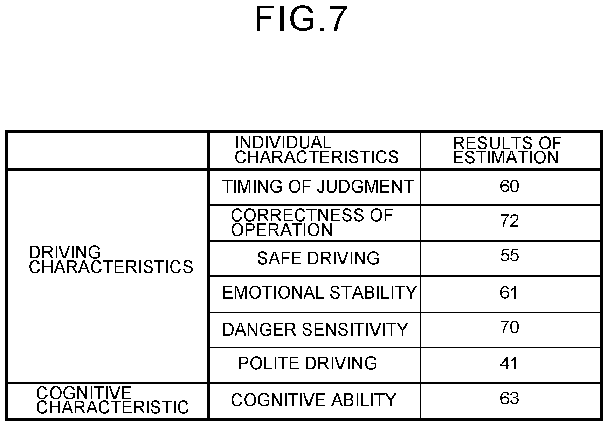

Here, examples of the driving characteristics and the cognitive characteristic that serve as the individual characteristics are explained with reference to Fig. 7. As illustrated in Fig. 7, in the present embodiment, timing of judgment, correctness of operation, safe driving, emotional stability, danger sensitivity, and polite driving are respectively estimated as the driving characteristics. The estimated results are calculated as scores from 0 to 100.

For the item of timing of judgment, a characteristic relating to the degree to which the driver can quickly judge the situation at the periphery of the vehicle V and the degree to which the driver can carry out an operation quickly is estimated. For the item that is correctness of operation, a characteristic relating to the degree of correctness of the operation of the vehicle V is estimated.

For the safe driving item, a characteristic relating to the degree to which the driver is mindful of safe driving is estimated. Further, for the emotional stability item, a characteristic relating to the degree of calmness without carrying out emotional driving is estimated. For the danger sensitivity item, a characteristic relating to the degree to which the driver can quickly judge a dangerous situation is estimated. For the polite driving item, a characteristic relating to the consideration that the driver gives to vehicles and pedestrians at the periphery of the own vehicle is estimated.

As the cognitive characteristic, a cognitive ability item is calculated as a score from 0 to 100.

### (Operation)

Operation of the present embodiment is described next.

### (Individual Characteristics Estimating Processing)

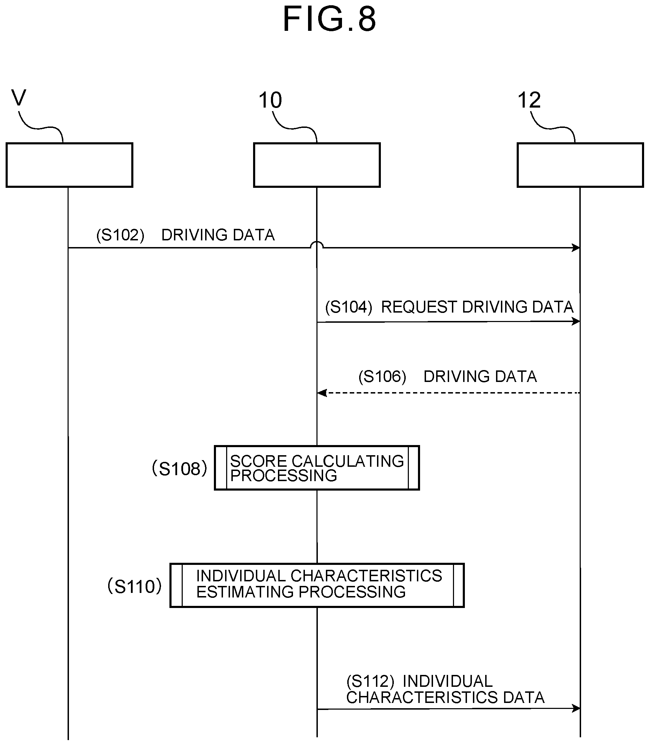

An example of the flow of individual characteristics estimating processing is described by using the sequence drawing shown in Fig. 8. Note that the processing at the individual characteristics management device 10 is realized by the CPU 20 functioning as the data acquiring section 62, the score calculating section 64, and the individual characteristics estimating section 68.

In step S102, driving data is transmitted from the vehicle V to the server 12. Specifically, signals detected at the sensors such as the acceleration sensor 54 and the steering angle sensor 56 and the like that are installed in the vehicle V are transmitted to the server 12 as driving data. Further, image data captured by the peripheral cameras 58 and the camera 60 for the driver as transmitted to the server 12 as driving data. At this time, data that has been processed in advance at the vehicle V side may be transmitted to the server 12 as the driving data.

At the server 12, the driving data received from the vehicles V is accumulated per vehicle V or per driver.

In step S104, by the function of the data acquiring section 62, the individual characteristics management device 10 asks the server 12 for driving data. In step S106, driving data is transmitted from the server 12 to the individual characteristics management device 10.

In step S108, the individual characteristics management device 10 carries out score calculating processing. Specifically, by the function of the score calculating section 64, the individual characteristics management device 10 carries out calculation of the score or counting of the number of times for each of the driving evaluation items and from the driving data. In the present embodiment, formulas for calculating the scores and the like are stored in advance in the storage 26 of the individual characteristics management device 10, and the scores are calculated by using these formulas.

In step S110, the individual characteristics management device 10 carries out individual characteristics estimating processing. Specifically, by the function of the individual characteristics estimating section 68, the individual characteristics management device 10 inputs the driving data, which was acquired by the data acquiring section 62, and the scores, which were calculated by the score calculating section 64, into the learned model M, and executes the computing processing of the learned model M, and thereby estimates the individual characteristics.

In step S112, the data of the individual characteristics that was estimated by the individual characteristics estimating processing is transmitted to the server 12. Note that the individual characteristics data that are accumulated in the server 12 can be used for various applications. For example, advice on driving may be given by an appropriate method per driver based on the individual characteristics data. Further, the method of controlling the vehicle V may be changed per driver based on the individual characteristics data.

As described above, in the individual characteristics management device 10 relating to the present embodiment, individual characteristics of a driver are estimated based on driving data that relates to plural driving evaluation items that are set in advance. Therefore, highly accurate estimation can be carried out.

Further, in the present embodiment, characteristics that include driving characteristics and a cognitive characteristic are estimated as the individual characteristics. Therefore, a user can grasp characteristics that include driving characteristics and a cognitive characteristic.

Moreover, in the present embodiment, the individual characteristics of a driver can be estimated based on information captured by the peripheral cameras and the camera for the driver, in addition to the driving data that includes the acceleration and the steering of the vehicle V. Further, by estimating the individual characteristics by using the learned model on which machine learning for estimating individual characteristics has been carried out, the individual characteristics can be estimated highly accurately without necessitating complex computation.

Although the individual characteristics management device 10 relating to an embodiment has been described above, the technique of the present invention can, of course, be implemented in various forms within a scope that does not depart from the scope of the claims. For example, although the individual characteristics management device 10 is provided at the exterior of the vehicle V in the above-described embodiment, the present invention is not limited to this and may be structured such that the individual characteristics management device 10 is installed in the vehicle V. In this case, the individual characteristics management device 10 may acquire the driving data directly from the vehicle V, without the driving data of the vehicle V being transmitted to the server 12.

Further, the score calculating processing by the score calculating section 64 may be executed within the individual characteristics management device 10, or the necessary data may be transmitted to the server 12 and the score calculating processing executed at the server 12 side. Moreover, the individual characteristics estimating processing by the individual characteristics estimating section 68 may be executed within the individual characteristics management device 10, or the necessary data may be transmitted to the server 12 and the individual characteristics estimating processing executed at the server 12 side. In cases in which the score calculating processing and the individual characteristics estimating processing are executed at the server 12 side, the data such as the formulas and the like needed for score calculation, and the learned model M, may be stored in the server 12.

Moreover, in the above-described embodiment, the individual characteristics estimating section 68 estimates the individual characteristics by inputting the driving data and the like into the learned model M, and executing computing processing of the learned model M. However, the present invention is not limited to this. For example, individual characteristics may be estimated without using the learned model M. In this case, a method may be used in which a table, in which the individual characteristics and the scores and number of times of measurement of the driving data are associated with one another, is stored in advance, and the individual characteristics are estimated by referring to this table.

Still further, although the above embodiment describes a structure in which driving characteristics and a cognitive characteristic are estimated as the individual characteristics, the present invention is not limited to this. For example, in addition to the driving characteristics and the cognitive characteristic, psychological characteristics, visual functions, and states of health may be estimated as individual characteristics. Intellectual curiosity, conscientiousness, extroversion, cooperativity, emotional instability and the like are included as psychological characteristics. Static vision, dynamic vision, night vision, horizontal field of vision and the like are included as visual functions.

Further, in the above-described embodiment, data that includes acceleration operations, braking operations, steering operations, dangerous operations, compliance with signals, compliance with signs, and the driver state are used as the driving data, but the present invention is not limited to this. For example, some of the above-described data may be used as the driving data. Or, in addition to the above-described data, data that includes the absence/presence of road rage, the absence/presence of deviating from the vehicle lane, the absence/presence of minor collisions, or the like may be used as the driving data.

Further, any of various types of processors other than the CPU 20 may execute the processing that is executed due to the CPU 20 reading-in a program in the above-described embodiment. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the above-described processing may be executed by one of these various types of processors, or may be executed by a combination of two or more of the same type or different types of processors, e.g., plural FPGAs, or a combination of a CPU and an FPGA, or the like. Further, the hardware structures of these various types of processors are, more specifically, electrical circuits that combine circuit elements such as semiconductor elements and the like.

Moreover, although the above-described embodiment is structured such that the various data are stored in the storage 26 and the storage 46, the present invention is not limited to this. A non-transitory recording medium such as, for example, a CD (Compact Disk), a DVD (Digital Versatile Disk), a USB (Universal Serial Bus) memory, or the like may be used as the storage. In this case, various programs and data and the like are stored on these recording media.

## Claims

1. An individual characteristics management device (10) comprising:
a data acquiring section (62) acquiring driving data relating to a plurality of driving evaluation items that are set in advance, with diagnostic categories of the driving evaluation items divided into safety, compliance with laws/regulations, and driver state, with the diagnostic category that is safety divided into acceleration operations, braking operations, steering operations, and dangerous operations;
a score calculating section (64) configured to carry out calculating of a score or measurement of a number of times, for each of the driving evaluation items, based on the driving data acquired by the data acquiring section (62), wherein the dangerous operations are evaluated based on a number of times of detection of U-turns, a number of times of detection of failure to use turn signals, and a number of times an inter-vehicle distance to a preceding vehicle is less than or equal to a predetermined inter-vehicle distance; and
an individual characteristics estimating section (68) estimating a score for each of individual characteristics of a driver, based on the driving data acquired by the data acquiring section (62) and the scores calculated by the score calculating section (64),
wherein the individual characteristics include driving characteristics and a cognitive characteristic, the driving characteristics including the timing of judgment, correctness of operation, safe driving, emotional stability, danger sensitivity, and polite driving.

2. The individual characteristics management device (10) of claim 1, wherein the data acquiring section (62) acquires driving data, which includes at least acceleration and steering of a vehicle, as the driving evaluation items.

3. The individual characteristics management device of claim 2, wherein the data acquiring section (62) further acquires, as the driving evaluation items, information captured by peripheral cameras that capture images of a periphery of the vehicle and information captured by a camera for a driver (60) that captures images of a driver.

4. The individual characteristics management device (10) of any one of claims 1 through 3, wherein the individual characteristics estimating section (68) estimates the individual characteristics by inputting driving data acquired by the data acquiring section (62) into a learned model on which machine learning for estimating individual characteristics has been carried out, and executing computing processing of the learned model.

5. An individual characteristics management method comprising:
acquiring, by a data acquiring section (62), driving data relating to a plurality of driving evaluation items that are set in advance, with diagnostic categories of the driving evaluation items divided into safety, compliance with laws/regulations, and driver state, with the diagnostic category that is safety divided into acceleration operations, braking operations, steering operations, and dangerous operations;
carrying out, by a score calculating section (64), calculating of a score or measurement of a number of times, for each of the driving evaluation items, based on the driving data acquired by the data acquiring section (62), wherein the dangerous operations are evaluated based on a number of times of detection of U-turns, a number of times of detection of failure to use turn signals, and a number of times an inter-vehicle distance is less than or equal to a predetermined inter-vehicle distance; and
estimating, by an individual characteristics estimating section (68), a score for each of individual characteristics of a driver based on the driving data acquired by the data acquiring section (62) and the scores calculated by the score calculating section (64),
wherein the individual characteristics include driving characteristics and a cognitive characteristic, the driving characteristics including the timing of judgment, correctness of operation, safe driving, emotional stability, danger sensitivity, and polite driving.

6. A non-transitory storage medium storing a program executable by a computer to execute processing, the processing comprising:
acquiring, by a data acquiring section (62), driving data relating to a plurality of driving evaluation items that are set in advance, with diagnostic categories of the driving evaluation items divided into safety, compliance with laws/regulations, and driver state, with the diagnostic category that is safety divided into acceleration operations, braking operations, steering operations, and dangerous operations;
carrying out, by a score calculating section (64), calculating of a score or measurement of a number of times, for each of the driving evaluation items, based on the driving data acquired by the data acquiring section (62), wherein the dangerous operations are evaluated based on a number of times of detection of U-turns, a number of times of detection of failure to use turn signals, and a number of times an inter-vehicle distance is less than or equal to a predetermined inter-vehicle distance; and
estimating, by an individual characteristics estimating section (68), a score for each of individual characteristics of a driver based on the driving data acquired by the data acquiring section (62) and the scores calculated by the score calculating section (64),
wherein the individual characteristics include driving characteristics and a cognitive characteristic, the driving characteristics including the timing of judgment, correctness of operation, safe driving, emotional stability, danger sensitivity, and polite driving.

## Patentansprüche

1. Vorrichtung (10) für die Verwaltung individueller Merkmale, umfassend:
einen Datenerfassungsbereich (62), der Fahrdaten erfasst, die sich auf eine Mehrzahl von Fahrbewertungspunkten beziehen, die im Voraus eingestellt werden, wobei die Diagnosekategorien der Fahrbewertungspunkte in Sicherheit, Einhaltung von Gesetzen/Vorschriften und Fahrerzustand unterteilt sind, wobei die Diagnosekategorie, die die Sicherheit ist, in Beschleunigungsvorgänge, Bremsvorgänge, Lenkvorgänge und gefährliche Vorgänge unterteilt ist;
einen Bewertungszahlberechnungsbereich (64), der dazu konfiguriert ist, die Berechnung einer Bewertungszahl oder Messung einer Anzahl von Malen für jeden der Fahrbewertungspunkte auf Grundlage der Fahrdaten auszuführen, die durch den Datenerfassungsbereich (62) erfasst wurden, wobei die gefährlichen Vorgänge auf Grundlage einer Anzahl von Malen der Erkennung von Wenden, einer Anzahl von Malen der Erkennung von Nichtverwendung von Blinkersignalen und einer Anzahl von Malen, bei denen ein Abstand zwischen den Fahrzeugen zu einem vorhergehenden Fahrzeug kleiner oder gleich einem vorbestimmten Abstand zwischen den Fahrzeugen ist, bewertet werden; und
einen Schätzungsbereich (68) für individuelle Merkmale, der eine Bewertungszahl für jedes der individuellen Merkmale eines Fahrers auf Grundlage der Fahrdaten, die von dem Datenerfassungsbereich (62) erfasst wurden, und der Bewertungspunkten, die durch den Bewertungszahlberechnungsbereich (64) berechnet wurden,
wobei die individuellen Merkmale Fahrmerkmale und ein kognitives Merkmal beinhalten, wobei die Fahrmerkmale die Zeitplanung der Beurteilung, die Korrektheit des Betriebs, sicheres Fahren, emotionale Stabilität, Gefahrensensibilität und höfliches Fahren beinhalten.

2. Vorrichtung (10) für die Verwaltung individueller Merkmale nach Anspruch 1, wobei der Datenerfassungsbereich (62) Fahrdaten, die wenigstens die Beschleunigung und die Lenkung eines Fahrzeugs beinhalten, als die Fahrbewertungspunkte beinhaltet.

3. Vorrichtung für die Verwaltung individueller Merkmale nach Anspruch 2, wobei der Datenerfassungsbereich (62) ferner als die Fahrbewertungspunkte Informationen, die von peripheren Kameras erfasst werden, die Bilder einer Peripherie des Fahrzeugs erfassen, und Informationen erfasst, die von einer Kamera für einen Fahrer (60) aufgenommen werden, die Bilder eines Fahrers aufnimmt.

4. Vorrichtung (10) für die Verwaltung individueller Merkmale nach einem der Ansprüche 1 bis einschließlich 3, wobei der Schätzungsbereich (68) für individuelle Merkmale die individuellen Merkmale durch Eingeben von Fahrdaten, die von dem Datenerfassungsbereich (62) erfasst wurden, in ein erlerntes Modell, auf dem maschinelles Lernen zum Schätzen von individuellen Merkmalen ausgeführt worden ist, und Ausführen von Rechenvorgängen des erlernten Modells schätzt.

5. Verfahren zum Verwalten individueller Merkmale, umfassend:
Erfassen durch einen Datenerfassungsbereich (62) von Fahrdaten, die sich auf eine Mehrzahl von Fahrbewertungspunkten beziehen, die im Voraus eingestellt werden, wobei die Diagnosekategorien der Fahrbewertungspunkte in Sicherheit, Einhaltung von Gesetzen/Vorschriften und Fahrerzustand unterteilt sind, wobei die Diagnosekategorie, die die Sicherheit ist, in Beschleunigungsvorgänge, Bremsvorgänge, Lenkvorgänge und gefährliche Vorgänge unterteilt ist;
Ausführen durch einen Bewertungszahlberechnungsbereich (64) einer Berechnung einer Bewertungszahl oder Messung einer Anzahl von Malen für jeden der Fahrbewertungspunkte auf Grundlage der Fahrdaten, die durch den Datenerfassungsbereich (62) erfasst wurden, wobei die gefährlichen Vorgänge auf Grundlage einer Anzahl von Malen der Erkennung von Wenden, einer Anzahl von Malen der Erkennung von Nichtverwendung von Blinkersignalen und einer Anzahl von Malen, bei denen ein Abstand zwischen den Fahrzeugen zu einem vorhergehenden Fahrzeug kleiner oder gleich einem vorbestimmten Abstand zwischen den Fahrzeugen ist, bewertet werden; und
Schätzen durch einen Schätzungsbereich (68) für individuelle Merkmale einer Bewertungszahl für jedes der individuellen Merkmale eines Fahrers auf Grundlage der Fahrdaten, die von dem Datenerfassungsbereich (62) erfasst wurden, und der Bewertungspunkte, die durch den Bewertungszahlberechnungsbereich (64) berechnet wurden,
wobei die individuellen Merkmale Fahrmerkmale und ein kognitives Merkmal beinhalten, wobei die Fahrmerkmale die Zeitplanung der Beurteilung, die Korrektheit des Betriebs, sicheres Fahren, emotionale Stabilität, Gefahrensensibilität und höfliches Fahren beinhalten.

6. Nicht-transitorisches Speichermedium, das ein Programm speichert, das von einem Computer ausgeführt werden kann, um eine Verarbeitung auszuführen, wobei die Verarbeitung umfasst:
Erfassen durch einen Datenerfassungsbereich (62) von Fahrdaten, die sich auf eine Mehrzahl von Fahrbewertungspunkten beziehen, die im Voraus eingestellt werden, wobei die Diagnosekategorien der Fahrbewertungspunkte in Sicherheit, Einhaltung von Gesetzen/Vorschriften und Fahrerzustand unterteilt sind, wobei die Diagnosekategorie, die die Sicherheit ist, in Beschleunigungsvorgänge, Bremsvorgänge, Lenkvorgänge und gefährliche Vorgänge unterteilt ist;
Ausführen durch einen Bewertungszahlberechnungsbereich (64) einer Berechnung einer Bewertungszahl oder Messung einer Anzahl von Malen für jeden der Fahrbewertungspunkte auf Grundlage der Fahrdaten, die durch den Datenerfassungsbereich (62) erfasst wurden, wobei die gefährlichen Vorgänge auf Grundlage einer Anzahl von Malen der Erkennung von Wenden, einer Anzahl von Malen der Erkennung von Nichtverwendung von Blinkersignalen und einer Anzahl von Malen, bei denen ein Abstand zwischen den Fahrzeugen zu einem vorhergehenden Fahrzeug kleiner oder gleich einem vorbestimmten Abstand zwischen den Fahrzeugen ist, bewertet werden; und
Schätzen durch einen Schätzungsbereich (68) für individuelle Merkmale einer Bewertungszahl für jedes der individuellen Merkmale eines Fahrers auf Grundlage der Fahrdaten, die von dem Datenerfassungsbereich (62) erfasst wurden, und der Bewertungspunkten, die durch den Bewertungszahlberechnungsbereich (64) berechnet wurden,
wobei die individuellen Merkmale Fahrmerkmale und ein kognitives Merkmal beinhalten, wobei die Fahrmerkmale die Zeitplanung der Beurteilung, die Korrektheit des Betriebs, sicheres Fahren, emotionale Stabilität, Gefahrensensibilität und höfliches Fahren beinhalten.

## Revendications

1. Dispositif de gestion de caractéristiques individuelles (10) comprenant :
une section d'acquisition de données (62) acquérant des données de conduite relatives à une pluralité d'items d'évaluation de conduite qui sont définis à l'avance, des catégories de diagnostic des items d'évaluation de conduite étant divisées en sécurité, conformité aux lois/réglementations, et état de conducteur, la catégorie de diagnostic qui est la sécurité étant divisée en opérations d'accélération, opérations de freinage, opérations de direction, et opérations dangereuses ;
une section de calcul de score (64) configurée pour réaliser un calcul d'un score d'une mesure d'un nombre de fois, pour chacun des items d'évaluation de conduite, sur la base des données de conduite acquises par la section d'acquisition de données (62), dans lequel les opérations dangereuses sont évaluées sur la base d'un nombre de fois de détection de demi-tours, d'un nombre de fois de détection de non-utilisation des clignotants, et d'un nombre de fois qu'une distance inter-véhicules par rapport à un véhicule précédent est inférieure ou égale à une distance inter-véhicules prédéterminée ; et
une section d'estimation de caractéristiques individuelles (68) estimant un score pour chacune de caractéristiques individuelles d'un conducteur, sur la base des données de conduite acquises par la section d'acquisition de données (62) et des scores calculés par la section de calcul de score (64),
dans lequel les caractéristiques individuelles incluent des caractéristiques de conduite et une caractéristique cognitive, les caractéristiques de conduite incluant le délai de jugement, une conduite correcte, une conduite sûre, la stabilité émotionnelle, la sensibilité au danger, et une conduite polie.

2. Dispositif de gestion de caractéristiques individuelles (10) selon la revendication 1, dans lequel la section d'acquisition de données (62) acquiert des données de conduite, qui incluent au moins une accélération et une direction d'un véhicule, en tant qu'items d'évaluation de conduite.

3. Dispositif de gestion de caractéristiques individuelles selon la revendication 2, dans lequel la section d'acquisition de données (62) acquiert en outre, en tant qu'items d'évaluation de conduite, des informations capturées par des caméras périphériques qui capturent des images d'une périphérie du véhicule et des informations capturées par une caméra pour un conducteur (60) qui capture des images d'un conducteur.

4. Dispositif de gestion de caractéristiques individuelles (10) selon l'une quelconque des revendications 1 à 3, dans lequel la section d'estimation de caractéristiques individuelles (68) estime les caractéristiques individuelles par fourniture en entrée de données de conduite acquises par la section d'acquisition de données (62) à un modèle appris sur lequel l'apprentissage automatique pour une estimation de caractéristiques individuelles a été réalisé, et exécution d'un traitement informatique du modèle appris.

5. Procédé de gestion de caractéristiques individuelles comprenant :
l'acquisition, par une section d'acquisition de données (62), de données de conduite relatives à une pluralité d'items d'évaluation de conduite qui sont définis à l'avance, des catégories de diagnostic des items d'évaluation de conduite étant divisées en sécurité, conformité aux lois/réglementations, et état de conducteur, la catégorie de diagnostic qui est la sécurité étant divisée en opérations d'accélération, opérations de freinage, opérations de direction, et opérations dangereuses ;
la réalisation, par une section de calcul de score (64), du calcul d'un score ou d'une mesure d'un nombre de fois, pour chacun des items d'évaluation de conduite, sur la base des données de conduite acquises par la section d'acquisition de données (62), dans lequel les opérations dangereuses sont évaluées sur la base d'un nombre de fois de détection de demi-tours, d'un nombre de fois de détection de non-utilisation des clignotants, et d'un nombre de fois qu'une distance inter-véhicules est inférieure ou égale à une distance inter-véhicules prédéterminée ; et
l'estimation, par une section d'estimation de caractéristiques individuelles (68), d'un score pour chacune de caractéristiques individuelles d'un conducteur, sur la base des données de conduite acquises par la section d'acquisition de données (62) et des scores calculés par la section de calcul de score (64),
dans lequel les caractéristiques individuelles incluent des caractéristiques de conduite et une caractéristique cognitive, les caractéristiques de conduite incluant le délai de jugement, une conduite correcte, une conduite sûre, la stabilité émotionnelle, la sensibilité au danger, et une conduite polie.

6. Support de stockage non transitoire stockant un programme exécutable par un ordinateur pour exécuter un traitement, le traitement comprenant :
l'acquisition, par une section d'acquisition de données (62), de données de conduite relatives à une pluralité d'items d'évaluation de conduite qui sont définis à l'avance, des catégories de diagnostic des items d'évaluation de conduite étant divisées en sécurité, conformité aux lois/réglementations, et état de conducteur, la catégorie de diagnostic qui est la sécurité étant divisée en opérations d'accélération, opérations de freinage, opérations de direction, et opérations dangereuses ;
la réalisation, par une section de calcul de score (64), du calcul d'un score ou d'une mesure d'un nombre de fois, pour chacun des items d'évaluation de conduite, sur la base des données de conduite acquises par la section d'acquisition de données (62), dans lequel les opérations dangereuses sont évaluées sur la base d'un nombre de fois de détection de demi-tours, d'un nombre de fois de détection de non-utilisation des clignotants, et d'un nombre de fois qu'une distance inter-véhicules est inférieure ou égale à une distance inter-véhicules prédéterminée ; et
l'estimation, par une section d'estimation de caractéristiques individuelles (68), d'un score pour chacune de caractéristiques individuelles d'un conducteur, sur la base des données de conduite acquises par la section d'acquisition de données (62) et des scores calculés par la section de calcul de score (64),
dans lequel les caractéristiques individuelles incluent des caractéristiques de conduite et une caractéristique cognitive, les caractéristiques de conduite incluant le délai de jugement, une conduite correcte, une conduite sûre, la stabilité émotionnelle, la sensibilité au danger, et une conduite polie.
